# EUROPÄISCHE PATENTANMELDUNG

(11) **EP 1 712 898 A1**
(43) Veröffentlichungstag der Anmeldung: **18.10.2006**
(21) Anmeldenummer: 06101302.5
(22) Anmeldetag: 06.02.2006
(51) Int. Cl.: G01N 21/956, G01N 21/88, G06T 7/00, H01L 21/66, G06T 5/50, G01R 31/308

(54) **Verfahren zur Inspektion eines Wafers**

(30) Priorität: 15.04.2005 DE 102005017642
(71) Anmelder: Leica Microsystems Jena GmbH, 07745 Jena (DE)
(72) Erfinder: Wienecke, Joachim, 07745 Jena (DE); Wolter, Detlef, 07751 Jenaprießnitz (DE)
(74) Vertreter: Reichert, Werner Franz

(57) **Zusammenfassung**

Die Erfindung gibt ein Verfahren zur Inspektion der Oberfläche eines Wafers an, bei dem ein mittels Kamera aufgenommenes Bild eines Wafers bezüglich der Aufnahmegüte bewertet wird und gegebenenfalls erneut aufgenommen wird, bevor eine Bewertung des Wafers durch Auswertung des Bildes erfolgt.

## Beschreibung

Die Erfindung betrifft ein Verfahren zur Inspektion der Oberfläche eines Wafers, bei dem eine Bewertung des Wafers durch Auswertung des Bildes des Wafers erfolgt.

Ein Verfahren der genannten Art ist nach DE 103 07 454 A1 bekannt. Bei diesem Verfahren wird von der Oberfläche eines Wafers ein Bild mit Bildpunkten aufgenommen. Aus den Farbwerten der Bildpunkte wird eine Häufigkeitsverteilung der Farbwerte berechnet. Die so berechnete Häufigkeitsverteilung wird mit einer gespeicherten Häufigkeitsverteilung verglichen und daraus die Qualität der Oberfläche des Wafers beurteilt. Vereinzelt treten Fehler in der Aufnahme des Bildes auf, deren Ursache im Einzelfall nur schwer gefunden werden kann.

Nachteilig ist gegenüber dem bekannten Stand der Technik, dass Fehler in der Aufnahme des Bildes als Fehler des Wafers interpretiert werden.

Der Erfindung liegt daher die Aufgabe zugrunde, das Verfahren der eingangs beschriebenen Art so weiterzubilden, dass fehlerhafte Aufnahmen des Wafers automatisch erkannt und korrigiert werden.

Diese Aufgabe wird durch das im Anspruch 1 bestimmte Verfahren gelöst. Vorteilhafte Ausgestaltungen der Erfindung sind in den weiteren Unteransprüchen gegeben.

Erfindungsgemäß ist die Aufgabe bei einem Verfahren zur Inspektion der Oberfläche eines Wafers mit den folgenden Verfahrensschritten gelöst:

Aufnehmen eines Bildes des Wafers, - automatisches Bewerten des Bildes, - in Abgängigkeit von der Bewertung gegebenenfalls automatisches erneutes Aufnehmen des Bildes des Wafers und - Auswerten des Bildes zur Inspektion des Wafers.

Das Aufnehmen umfasst das Beleuchten durch eine Beleuchtungseinrichtung und das Abbilden des Wafers in eine Kamera. Die Beleuchtung kann kontinuierlich oder im Takt der Aufnahmen gepulst erfolgen.

Die Erfindung gibt somit ein Verfahren zur Inspektion der Oberfläche eines Wafers an, bei dem ein mittels Kamera aufgenommenes Bild eines Wafers bezüglich der Aufnahmegüte bewertet wird und gegebenenfalls erneut aufgenommen wird, bevor eine Bewertung des Wafers durch Auswertung des Bildes erfolgt.

Dies hat den Vorteil, dass gegebenenfalls solange eine erneute Aufnahme des Wafers erfolgt, bis ein brauchbares Bild zur Auswertung des Wafers zur Verfügung steht. Darüber hinaus wird der Betreiber der ausführenden Anlage durch die gelegentlichen Fehlaufnahmen nicht bezüglich der Qualität der Anlage verunsichert.

Vorzugsweise ist vorgesehen, dass das Bewerten ein Vergleichen des Bildes mit einem Referenzbild umfasst.

Dies hat den Vorteil, dass das Bewerten in einfacher Weise und mit einem zur späteren Auswertung des Wafers ohnehin vorliegenden Referenzbild erfolgt.

Zweckmäßigerweise ist vorgesehen, dass das Aufnehmen des Bildes in Teilbildern erfolgt.

Dies hat den Vorteil, dass die Größe der Teilbilder optimal an die Kameraauflösung und die Optik angepasst werden kann.

Die Teilbilder entsprechen einem Stepper-Belichtungsbereich, auch Stepper Area Window (SAW) genannt, und umfassen einen Teil, einen oder mehrere Dies oder Halbleiterbauelemente.

Das Gesamtbild wird zunächst vollständig in Teilbildern aufgenommen und aus dem zusammengesetzten Gesamtbild oder der Summe der Teilbilder die Bewertung beziehungsweise das Histogramm für die Bewertung gebildet. Die Bewertung über das zusammengesetzte Gesamtbild hat den Vorteil, dass auch Fehler, die beim Zusammensetzen entstanden sind, durch die Bewertung erkannt werden.

Günstigerweise ist vorgesehen, dass beim Bewerten das Histogramm des Bildes mit einem Referenzhistogramm verglichen wird.

Dies hat den Vorteil, dass die Bewertung schnell erfolgen kann, da ein Histogramm einen stark reduzierten und quantitativ vergleichbaren Datensatz eines Bildes darstellt. Dadurch erfolgt die Inspektion des Wafers schneller und wird aufgrund geringerer benötigter Rechenleistung preiswerter.

Ein Histogramm ist eine Häufigkeitsverteilung von Bildpunkten ähnlicher Art.

Das Histogramm des Bildes kann auch ein Histogramm eines Differenzbildes vom Bild sein. Das Differenzbild wird durch Subtraktion für die einzelnen Pixelwerte des Referenzbildes vom Bild erzeugt. Das für das Differenzbild verwendete Referenzhistogramm enthält dann nur Nullwerte. Der Vergleich liegt mit dem Histogramm über das Differenzbild bereits vor.

Nach einer Weiterbildung der Erfindung ist vorgesehen, dass das Histogramm ein Grau- oder Farbwertehistogramm ist.

Bei einem Grauwertehistogramm ist mehreren Bereichen von Helligkeitswerten von Schwarz in Graustufen bis Weiß deren Häufigkeit an entsprechenden Bildpunkten oder Bildregionen des Gesamtbildes zugeordnet. Als Helligkeitswerte können etwa die Summe der Intensitäten der drei Kanäle des RGB-Farbraumes oder die Luminanz Y des YUV-Farbraumes gewählt sein. Üblicherweise sind 256 Grauwertstufen von Schwarz bis Weiß gewählt. Bei einem Farbwertehistogramm ist mehreren Bereichen von Farbkoordinatenwerten deren Häufigkeit an entsprechenden Bildpunkten oder Bildregionen des Gesamtbildes zugeordnet. Als Farbkoordinatenwerte können einfach die Helligkeitswerte einzelner Farbkanäle, etwa rot, grün oder blau des RGB-Farbraumes oder etwa die Chrominanz U oder V des YUV-Farbraumes gewählt sein. Dies entspricht einem Grauwertehistogramm für einen Farbkanal. Als Farbkoordinatenwerte können aber auch Kombinationen oder Verhältnisse von Farbanteilen gewählt werden.

Nach einer bevorzugten Weiterbildung der Erfindung ist vorgesehen, dass lediglich ein hell- und/oder dunkelendiger Bereich des Histogramms verglichen wird.

Dies hat den Vorteil, dass die zu vergleichende Datenmenge reduziert ist und somit die benötigte Rechenleistung minimiert und die Verarbeitungsgeschwindigkeit erhöht wird. Dadurch erfolgt die Inspektion des Wafers schneller und wird preiswerter.

Versuche haben gezeigt, dass die typischen Aufnahmefehler, keine Belichtung des Bildes oder eines Teilbildes oder falsches Zusammenfügen von Teilbildern zum Bild, dazu führen, dass signifikant besonders helle oder besonders dunkle Helligkeitswerte dem Teilbild oder Bild hinzugefügt sind oder fehlen. Daher ist es ausreichend, diese erhöhten oder erniedrigten hellen oder dunklen Helligkeitswerte festzustellen, um ein fehlerhaftes Bild zu erkennen. Im Gegensatz dazu zeigt das Histogramm einer fehlerfreien Aufnahme eines fehlerhaften Wafers eine geringe Verformung des gesamten Histogramms oder eine Verformung vor allem in der Mitte des Histogramms.

Günstigerweise ist vorgesehen, dass das Referenzhistogramm aus dem Bild eines Referenzwafers gewonnen wird. Dies geschieht in einer Lernphase vor dem Aufnehmen eines zu inspizierenden Wafers.

Vorzugsweise ist vorgesehen, dass das Referenzhistogramm durch Mittelung über die Histogramme von Bildern mehrerer Wafer gewonnen wird. Dies geschieht in einer Lernphase vor dem Aufnehmen eines zu inspizierenden Wafers.

Dies hat den Vorteil, dass das Referenzhistogramm nicht von einer zufälligen Eigenart eines einzelnen Wafers geprägt ist, da zufällige einzelne Fehler der einzelnen Wafer bei der Mittelung untergehen.

Zweckmäßigerweise ist vorgesehen, dass für die Abhängigkeit für das erneute Aufnehmen ein oder mehrere Schwellenwerte definiert sind.

Dies hat den Vorteil, dass gewisse Abweichungen von Bild und Referenzbild toleriert werden und nicht unkorrekt ein fehlerhaftes Bild erkannt wird.

Die Schwellenwerte können durch eine Eingabeeinrichtung von einem Bediener verändert werden oder durch Angabe von guten und fehlerhaften Bildern erlernt werden.

Somit vollzieht sich die Bewertung des Bildes in den folgenden Schritten: - Erstellung eines Histogramms aus dem Bild mindestens für den hell- oder/und den dunkelendigen Bereich. - Subtraktion der analogen Bereiche von Histogramm und Referenzhistogramm. - Vergleich, ob die jeweiligen absoluten Differenzwerte die Schwellenwerte überschreiten. - Falls die Schwellenwerte überschritten werden, wird das Bild als fehlerhaft bewertet und ein erneutes Aufnehmen des Bildes veranlasst.

Mit Vorteil ist vorgesehen, dass das Bild ein Teilbild des Wafers ist.

Somit wird die Aufnahme eines Teilbildes dahingehend bewertet, ob das Teilbild fehlerhaft ist. Erst anschließend wird das nächste Teilbild aufgenommen oder die Teilbilder zum Gesamtbild zusammengesetzt

Dies hat den Vorteil, dass Aufnahmefehler eines Teilbildes sofort durch die erneute Aufnahme korrigiert werden können und nicht erneut etwa der gesamte Aufnahmeprozess für den Wafer durchlaufen werden muss.

Das Auswerten des Bildes zur Bewertung des Wafers kann in diesem Fall auch das Zusammensetzen der Teilbilder zu einem Gesamtbild umfassen.

Mit besonderem Vorteil ist vorgesehen, dass das Auswerten des Bildes zur Inspektion des Wafers in Abhängigkeit der Bewertung des Bildes erfolgt.

Etwa kann das zur Bewertung erstellte Histogramm des Bildes oder eines Teilbildes zur weiteren Bewertung des Wafers mit herangezogen werden. Das Histogramm muss somit nicht ein weiteres Mal erstellt werden.Dies hat den Vorteil, dass das Arbeitsergebnis bei der Bewertung des Bildes, das bei der Auswertung des Wafers nochmals verwendet werden kann, nicht nochmals bei der Auswertung erstellt werden muss. Dadurch kann das Verfahren schneller und mit geringerer Rechenleistung und damit preiswerter durchgeführt werden.

Die zu den einzelnen Ausgestaltungen der Erfindung genannten Vorteile sind nicht abschließend und auch nicht notwendigerweise die eigentlichen Hauptvorteile.

Im Folgenden wird die Erfindung anhand schematischer Darstellungen zu einem Ausführungsbeispiel näher erläutert. Gleiche Bezugszeichen in den einzelnen Figuren beizeichnen dabei gleiche Elemente. Es zeigen
- Fig. 1: eine schematische Übersicht der Vorrichtung zur Inspektion eines Wafers,
- Fig. 2: ein zusammengesetztes Bild eines Wafers,
- Fig.3: ein zusammengesetztes Bild eines Wafers mit einem Aufnahmefehler,
- Fig.4: ein zusammengesetztes Bild eines Wafers mit einem anderen Aufnahmefehler,
- Fig. 5: ein Referenz-Histogramm eines Referenzwafers,
- Fig. 6: ein Histogramm eines Wafers und
- Fig. 7: einen Vergleich des Histogramms mit dem Referenzhistogramm.

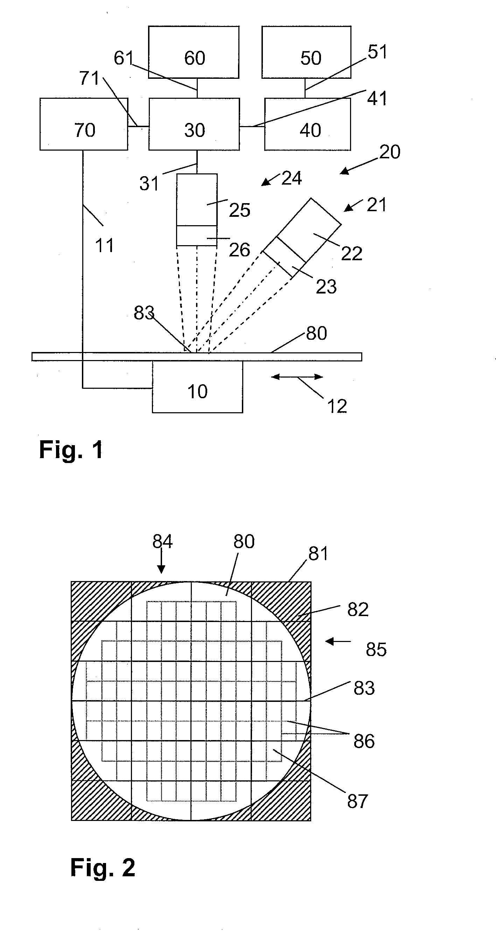

Die Figur 1 zeigt eine schematische Übersicht der Vorrichtung zur Inspektion eines Wafers.

Der Wafer 80 ist von einer Transporteinrichtung 10 gehalten. Die Transporteinrichtung ist ein X-Y-Verschiebetisch, der den Wafer in zwei senkrechte Bewegungsrichtungen 12 parallel zu seiner Ausdehnungsebene bewegen kann. Die Transporteinrichtung ist mit einer Datenleitung 11 mit einer Streuereinrichtung 70 verbunden.

Die Bildaufnahmeeinrichtung 20 umfasst eine Beleuchtungseinrichtung 21 mit einer Lichtquelle 22 und einem Objektiv 23 und eine Bilderfassungseinrichtung 24 mit einer Kamera 25 und einem Objektiv 26. Die Kamera ist üblicherweise eine Farb-CCD-Kamera, könnte aber auch eine andere Matrixkamera, eine Zeilenkamera oder ein sonstiger Helligkeits- oder Farbsensor sein. Die Kamera nimmt ein Teilbild 83 des Wafers auf, das von der Beleuchtungseinrichtung beleuchtet wird. Die Beleuchtungseinrichtung kann als Hell- oder Dunkelfeldbeleuchtung, als Breitband, Multiband oder monochromatische Beleuchtung ausgeführt sein. Die Bilderfassungseinrichtung ist mit einer Datenverbindung 31 mit der Bildverarbeitungseinrichtung verbunden. Die Bildverarbeitungseinrichtung liest die Kamerabilder nach Maßgabe der mit ihr über eine Datenverbindung 71 verbundenen Steuereinrichtung aus und verarbeitet diese. Die Bildverarbeitungseinrichtung ist über eine Datenverbindung 41 mit der Speichereinrichtung 40 verbunden. In der Speichereinrichtung sind ein Referenzbild, ein Referenzhistogramm und Schwellenwerte hinterlegt. Das Referenzhistogramm und die Schwellenwerte können über eine mit der Speichereinrichtung über eine Datenleitung 51 verbundene Eingabeeinrichtung 50 vom Bediener verändert werden. Die Bildverarbeitungseinrichtung ist über eine Datenleitung 61 mit einer Ausgabeeinrichtung 60 verbunden. Die Ausgabeeinrichtung kann dem Bediener das Bild, Teilbilder, Histogramme, das Referenzhistogramm, die Schwellenwerte, oder einen Vergleich visualisieren.

Durch die Steuereinrichtung gesteuert, transportiert der X-Y-Scanntisch, ein sogenannter Stepper, den Wafer mäanderförmig unter dem Fokus der Kamera hinweg. Diese Relativbewegung zwischen Wafer und Kamera könnte auch durch eine entsprechende Bewegung der Kamera oder einer entsprechend bewegten Strahlführung der Kameraoptik erfolgen. Bewegung, Beleuchtung und Aufnahme sind über die Steuereinrichtung aufeinander abgestimmt. Die Bewegung erfolgt in Schüben mit dazwischenliegenden Bewegungspausen. In diesen Bewegungspausen erfolgt eine im allgemeinen blitzartige Beleuchtung und über die Bildverarbeitungseinrichtung und Kamera eine Aufnahme eines Teilbildes. Dieses Teilbild wird in der Speichereinrichtung abgelegt.

Die Figur 2 zeigt ein zusammengesetztes Bild eines Wafers.

Das von der Kamera und der Bildverarbeitungseinrichtung aufgenommene Bild 81 des Wafers 80 setzt sich aus den Teilbildern 83, den sogenannten Stepper Area Windows (SAW) zusammen. Zwischen dem Außenrand des Wafers und dem Außenrand des Bildes erstreckt sich ein Außenbereich 82, der im Allgemeinen den konstanten Hintergrund der Transporteinrichtung zeigt. Die SAWs sind in Zeilen 85 und Spalten 84 angeordnet und zeigen die ungehäusten Halbleiterchips, die sogenannten Dies 87, die von schmalen Trennbereichen 86 getrennt sind.

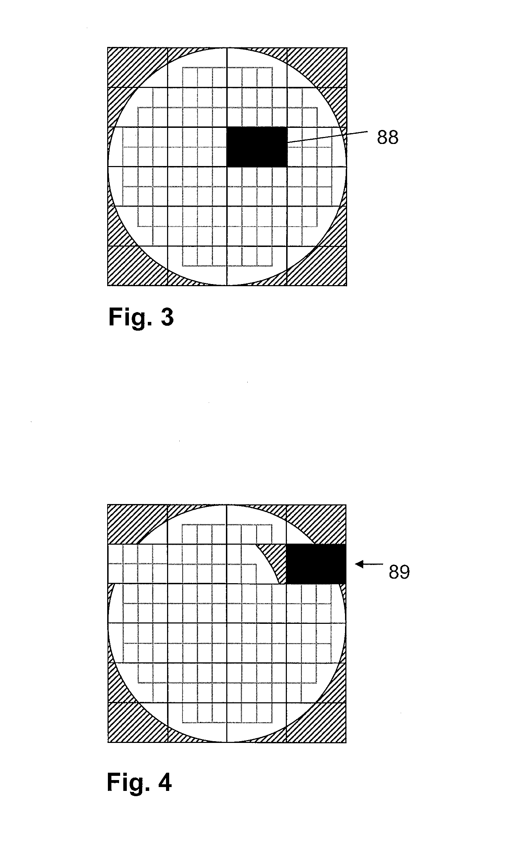

Die Figur 3 zeigt ein zusammengesetztes Bild eines Wafers mit einem Aufnahmefehler.

Unter den Teilbildern ist ein fehlerhaftes Teilbild 88 zu sehen. Dieser Fehler kann etwa durch Ausfall der Beleuchtung, der Kamera oder der Bilderfassungseinrichtung zum Zeitpunkt der Aufnahme entstanden sein oder durch einen Fehler in der Synchronisation der beteiligten Einheiten.

Die Figur 4 zeigt ein zusammengesetztes Bild eines Wafers mit einem anderen Aufnahmefehler.

Hier ist eine fehlerhafte Zeile 89 aus Teilbildern gezeigt. Diese Zeile ist um eine Spalte nach links versetzt, wobei an der frei werdenden rechten Seite ein Teilbild fehlt. Ein solcher Fehler kann aus den Algorithmen zur Optimierung der Kamerabildgröße bezüglich der SAW-Größe, zur Optimierung des Stepperweges, oder zur Speicherverwaltung herrühren.

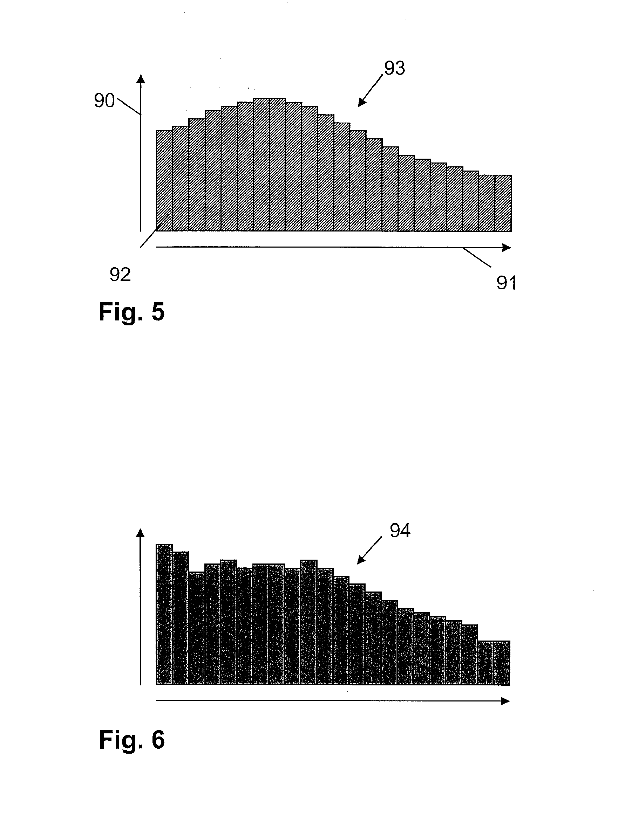

Die Figur 5 zeigt ein Referenz-Histogramm 93 eines Referenzwafers für die Grauwerte.

Die Abszisse zeigt die Helligkeit 91 von links schwarz bis rechts weiß, die Ordinate die relative Häufigkeit 90. Die Abszisse ist in Bereiche aufgeteilt, denen jeweils der dem Referenzbild entsprechende Häufigkeitswert 92 für den Helligkeitsbereich zugeordnet ist. Dunkles Mittelgrau ist hier am häufigsten im Bild vorhanden. Schwarz etwas weniger oft. Noch weniger reines Weiß. Die hier gezeigten Histogramme sind lediglich schematische Beispiele.

Die Figur 6 zeigt ein Histogramm 94 eines Wafers.

Die Häufigkeitswerte für Schwarz und Schwarzgrau sind hier erhöht, die für dunkles Mittelgrau und ebenso für Weiß sind erniedrigt.

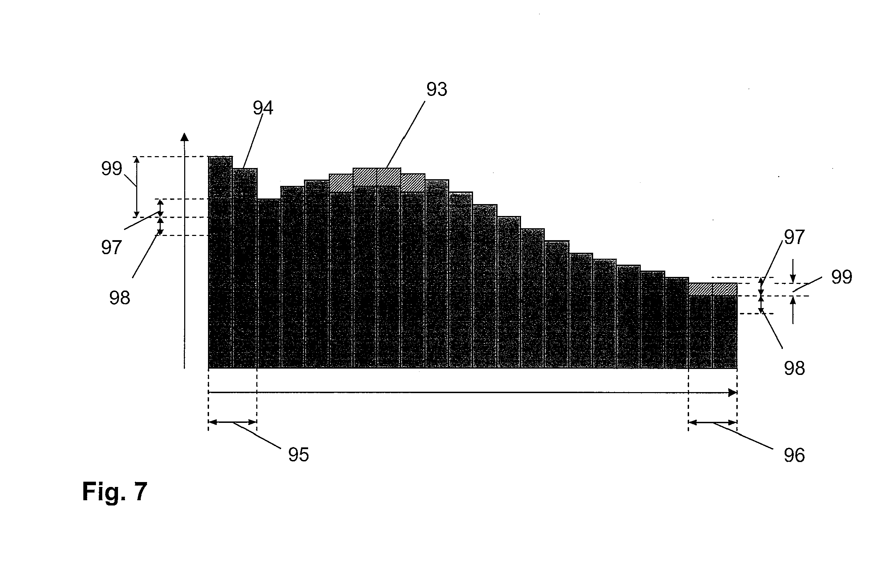

Die Figur 7 zeigt einen Vergleich des in Figur 6 gezeigten Histogramms 94 mit dem in Figur 5 gezeigten Referenzhistogramm 93. Dem Histogramm 94 ist das grau gestrichelte Referenzhistogramm 93 hinterlegt. Im dunkelendigen Bereich 95 überragt das Histogramm das Referenzhistogramm. Für den Helligkeitsbereich schwarz ist am Referenzhistogramm der obere Schwellenwert 97 und der untere Schellenwert 98 eingezeichnet. Das Histogramm zeigt im äußersten linken Helligkeitsbereich für schwarz gegenüber dem Referenzhistogramm eine Abweichung 99, die den oberen Schwellenwert 97 übersteigt. Dies ist das Kriterium, dass das Bild als fehlerhaft aufgenommen bewertet wird. Somit würde im vorliegenden Fall das Bild oder das Teilbild im Verfahren erneut aufgenommen werden. Die hier gezeigte Abweichung 99 könnte etwa durch den in Figur 3 oder Figur 4 gezeigten Fall verursacht sein.

Im hellendigen Bereich 96 unterschreitet das Histogramm das Referenzhistogramm. Für den Helligkeitsbereich Weiß ist am Referenzhistogramm ebenfalls der obere Schwellenwert 97 und der untere Schwellenwert 98 eingezeichnet. Hier zeigt das Histogramm im äußerst rechten Helligkeitsbereich für weis gegenüber dem Referenzhistogramm eine Abweichung 99, die den unteren Schwellenwert 98 nicht übersteigt. Aufgrund dieser Abweichung alleine würde das Bild noch nicht als fehlerhaft bewertet werden. Diese Abweichung könnte etwa durch einen Produktionsfehler des Wafers verursacht sein, ebenso wie die beim Maximum des Referenzhistogramms gezeigte Abweichung des Histogramms.

## Patentansprüche

1. Verfahren zur Inspektion der Oberfläche eines Wafers **gekennzeichnet durch** die folgenden Verfahrensschritte: - Aufnehmen eines Bildes des Wafers, - automatisches Bewerten des Bildes, - in Abgängigkeit von der Bewertung gegebenenfalls automatisches erneutes Aufnehmen des Bildes des Wafers und - Auswerten des Bildes zur Inspektion des Wafers.

2. Verfahren nach Anspruch 1, **dadurch gekennzeichnet, dass** das Bewerten ein Vergleichen des Bildes mit einem Referenzbild umfasst.

3. Verfahren nach einem der vorhergehenden Ansprüche, **dadurch gekennzeichnet, dass** das Aufnehmen des Bildes in Teilbildern erfolgt.

4. Verfahren nach einem der vorhergehenden Ansprüche, **dadurch gekennzeichnet, dass** beim Bewerten das Histogramm des Bildes mit einem Referenzhistogramm verglichen wird.

5. Verfahren nach Anspruch 4, **dadurch gekennzeichnet, dass** das Histogramm ein Grau- oder Farbwertehistogramm ist.

6. Verfahren nach Anspruch 5, **dadurch gekennzeichnet, dass** lediglich ein hell- und/oder dunkelendiger Bereich des Histogramm verglichen wird.

7. Verfahren nach einem der Ansprüche 4 bis 6, **dadurch gekennzeichnet, dass** das Referenzhistogramm aus dem Bild eines Referenzwafers gewonnen wird.

8. Verfahren nach einem der Ansprüche 4 bis 6, **dadurch gekennzeichnet, dass** das Referenzhistogramm durch Mittelung über die Histogramme von Bildern mehrerer Wafer gewonnen wird.

9. Verfahren nach einem der vorhergehenden Ansprüche, **dadurch gekennzeichnet, dass** für die Abhängigkeit für das erneute Aufnehmen Schwellenwerte definiert sind.

10. Verfahren nach einem der vorhergehenden Ansprüche, **dadurch gekennzeichnet, dass** das Bild ein Teilbild des Wafers ist.

11. Verfahren nach einem der vorhergehenden Ansprüche, **dadurch gekennzeichnet, dass** das Auswerten des Bildes zur Inspektion des Wafers in Abhängigkeit der Bewertung des Bildes erfolgt.
